# EUROPEAN PATENT APPLICATION

(11) **EP 1 475 485 A2**
(43) Date of publication of application: **10.11.2004**
(21) Application number: 04252703.6
(22) Date of filing: 10.05.2004
(51) Int. Cl.: E04B 1/61, F16B 5/00, E04C 2/16, E04C 3/10, E04B 9/26

(54) **Method of connecting components**

(30) Priority: 08.05.2003 GB 0310634
(71) Applicant: Supero Marketing Limited, Jersey JE4 8TY (GB)
(72) Inventor: Luty, Mark, Dr., Hawthorn Hill Maidenhead, SL6 3SU (GB)
(74) Representative: Rees, David Christopher

(57) **Abstract**

A method of connecting two building components (11,12) using a resilient elongate interconnector (13). One edge of the interconnector (13) is brought into engagement with a part of the first component (11) and the other edge is brought into engagement with a part of the second component (12). The interconnector (13) is deflected between the two elongate edges, thereby creating a transverse compression force which acts between the two components (11,12) to bring them together.

## Description

The present invention relates to a method of connecting components, in particular, architectural components and internal architectural features, both structural and decorative.

Earth movement, seismic vibrations, earthquakes, wind pressure and hurricane induced differential air pressure explosions exert potentially destructive forces on housing structures throughout the world. Factory finished housing systems that can be assembled quickly by semi-skilled workers as new-build or disaster replacement all have common problems in that they must be either decoratively finished on site because visible joints exist, or taken to site fully or partly assembled and decorated then manipulated into place by cranes and other mechanical handling devices.

It is an object of the present invention to provide a method of connecting components that will enable building structures to be assembled on-site but without the necessity for subsequent decorative finishing.

It is a further object of the invention to enable the structures to withstand potentially damaging forces with a minimum of damage even to the decorative finish.

It is a further object of the invention to enable decorative components such as cornices and architraves to be connected to a building structure very firmly and without any noticeable joint lines or gaps.

According to the invention, there is provided a method of connecting two components using a resilient elongate interconnector, the method comprising: bringing one elongate edge of the interconnector into engagement with a part of the first component; bringing another elongate edge of the interconnector into engagement with a part of the second component; and causing a deflection in the interconnector between the two elongate edges thereby creating in the interconnector a transverse compression force which acts between the two components, thereby driving them together.

Preferably, the interconnector engages the two components substantially along its entire length. This provides an evenly distributed force which is to be contrasted with the multiple point force arrangement which exists when components are connected using static pressure fixings, such as screws or bolts which the present invention replaces.

The compressive force in the interconnector will tend to force the parts of components which its edges engage apart. Preferably however, the components are configured so that as a whole, they are forced together by compressive force. The compressive force, which is distributed evenly along the length of the interconnector, will provide a very tight joint and this may have two important effects. Firstly, it may result in a joint which cannot be seen and secondly the two components will become as one, simulating a homogenous article rather than as assembly of components.

When the principle is extended to connecting a large number of components using a large number of interconnectors, a unitary structure such as a building can be formed with a rigidity equivalent to a monocoque construction. The arrangement enjoys the additional advantage that if the joined components are moved slightly apart by external forces, the compressive force in the interconnector will act to restore the separated components to their former tightly joined position.

While the components may be structural architectural elements, such as panels, they may also be internal architectural fixtures and features such as covings, trims, skirtings and dados. Some of these fixtures and features may nevertheless serve as structural elements.

The interconnector, in its undeflected state is preferably an elongate strip. It may simply be in the form of a flat tape or may have a more complex profile. Suitable materials for the strip include polycarbonate, polyester, nylon or other such polymer, beryllium copper, spring steel or other such metal and carbon or glass or kevlar reinforced polymer.

Preferably, therefore, the compressive force in the interconnector acts to urge the two components together into their final fully-engaged position. In a preferred arrangement, the two components are brought into engagement with the interconnector and are subsequently brought into their final fully engaged position by relative movement of the components, the relative movement bringing about the deflection in the interconnector, thereby creating the restorative force in the interconnector which acts to urge the components into their final position.

The core of the invention may be considered to be a simple strip of material with a high aspect ratio where the linear elastic properties of the strip are exploited in a way that is undesirable in static and quasi-static engineering structures. The strip is devised to be used as a strut in various forms. Elastic deformation possibly caused by the force of closure may create a reservoir of energy that is utilised to create a perpetual force in the same direction as (or orthogonal to) the direction of closure, even when the force of closure is removed.

The system of the invention enables simple assembly by unskilled labour without mechanical handling equipment that results in 1) an invisible joint between two coplanar panel faces, 2) an invisible joint between two orthogonal faces, 3) an elastic joint with a restoring energy of closure, 4) a monocoque stress flow membrane, and 5) a vibration damper.

The use of a resilient interconnector as the coupling agent between all the components effectively creates a continuous network of elastic gripping vanes enabling the structure to move and expand in sympathy with imposed natural forces.

The use of elongate resilient strip connectors creates an interconnecting network of compressive forces between on the one hand all individual joined wall, ceiling and floor panels thus making them into mono-plates respectively, and between on the other hand the ceiling mono-plates, wall mono-plates and floor mono-plates such that they are unable to slide independently with respect to each other thus creating a monolithic shell out of many independent parts in the same way that nature creates a monolithic solid out of many elemental particles largely by pressure.

In another embodiment, the interconnector may be deformed by an actuator which is operated when the components are in their required relative positions. Preferably, the actuator acts directly on the interconnector.

The actuator preferably takes the form of an elongate cam member which extends substantially the length of the interconnector and is arranged parallel to the interconnector. Preferably the actuator acts on the interconnector along its length. Preferably, the actuator has an eccentric axis about which it is rotatable to engage and act on the interconnector. There may be two or more interconnectors and actuators associated with each pair of components to be connected.

The components may be generally planar and may be connected parallel to each other, and so form effectively a wall, or may be connected at an angle, particularly 90°. When connected at an angle, a comer structure or a butt joint may be formed.

In another embodiment one component is located above the other and the two components are connected and held apart in a dynamic equilibrium condition by two interconnectors which each engage both components, the deflection in the interconnectors being caused by an applied force through the component above. Preferably each interconnector comprises a plurality of pins, fibres, acicular struts or plates.

The invention also extends to a modified form of panel, such as a building panel, arranged to receive and engage the interconnector. The panel comprises a fibre board panel which is locally modified in certain predetermined areas by impregnation with a resin. Thus for example, medium density fibre board (MDF) is a low cost building material with unique properties of strength, surface finish, machinability and dimensional stability in its supplied state, but it is limited in its use as a versatile engineering material by the very nature of its manufacture.

According to this aspect of the invention, these boards and similar products are locally modified by impregnation of resin with the specific aim of creating local properties that result in enhanced engineering materials. This is then one way to make feasible the resilient planar strip stress distribution network which forms the subject of the first aspect of the invention.

For example, MDF has a resin fraction content of no more than 10% with respect to the fibre fraction, which results in a notoriously low internal bond strength and so it easily delaminates in the planar lay of the fibres. It also has a poor machined finish when the smooth skin is broken since it is fibrous. If a resin of high wettability, low surface energy is allowed to penetrate the open fibrous structure of the machined face in the core of the panel then the resin fraction content could increase towards 90% of the volume of the board, thus creating a resilient plastic bearing member homogeneously deeply embedded within the fabric of a standard panel. This could also be effected for local screw and metal fitting attachments, avoiding the need for failure-prone inserts.

Preferably, the resin is impregnated to a represent up to 50%, more preferably 75%, for example 90% of the volume of the board where required. Suitable resins include polymethane diphenyl diisocyanate (PMDI) and urea formaldehyde (UF).

The invention extends to a structure formed using the method of the invention, preferably using panels modified as described.

According to another aspect, the invention provides a beam suitable for suspending a ceiling or supporting a floor, the beam comprising two interengaging elongate members, the first being relatively rigid and the second being relatively resilient, the interengagement of the two members being such that second member is forced into a deflected state by the first member, whereby the second member is in compression and the first member is in tension.

Preferably, the first member is a flat bar with an upturned shoulder at each end defining a nick at each end between the bar and the shoulders. Preferably, the second member is a resilient strip whose length is slightly greater than the distance between the shoulders of the first member. Preferably, the ends of the strip are located in the nicks, thereby causing the deflection in the second member.

The first member may be made of wood, steel, grp and concrete, the preferred material being steel. The second member may be made of grp, metal, wood, the preferred material being grp. Preferably, the length of the second member exceeds the distance between the shoulders of the first member by 1 to 10 %, more preferably by 2 to 4%.

A ceiling may be formed by suspending ceiling panels from the second member at spaced intervals. The panels may be in the preferred form described above and may be interconnected in accordance with the method of the invention. They may be interconnected by the use of suspension fittings suspended from the second member. Several beams may be needed, spaced apart from each other and extending in parallel.

A floor may be formed similarly but in this case, floor panels are supported at spaced intervals from the second member. The floor panels are preferably interconnected by support fittings extending upwards from the second member.

It will be appreciated that the invention enables the erection of an entire building including walls, ceilings, floors and internal fittings, all of which can be factory-finished prior to construction. Accurate machining of the components and the method of connection permits a rigid structure with a very high standard of decorative finish.

In a similar fashion, furniture units can be made to an equally high standard without the need of a skilled workforce.

The invention may be carried into practice in various ways and some embodiments will now be described by way of example with reference to the accompanying drawings, in which:
Figures 1a, 1b and 1c are sectional views through a first embodiment of the invention, with Figures 1b and c being enlarged portions, showing two panels and an interconnector in an initial engagement position;
Figures 2a and 2b are views similar to Figures 1a and 1b but with the two panels partially engaged;
Figures 3a and 3b are views similar to Figures 2a and 2b but with the panels almost fully engaged;
Figures 4a and 4b are views similar to Figures 3a and 3b but with the panels fully engaged;
Figure 5 is a sectional view showing the first embodiment applied to a comer joint;
Figure 6 shows in section a second embodiment of the invention, with the two panels and an interconnector in their initially engaged positions;
Figure 7 shows the second embodiment with the panels partially engaged;
Figure 8 shows the second embodiment with the panels fully engaged;
Figures 9a and 9b show a first variant of the embodiment of Figures 6 to 8;
Figures 10a and 10b show a second variant of the embodiment of Figures 6 to 8;
Figures 11a to 11d show a third variant of the embodiment of Figures 6 to 8;
Figure 12 shows in section a third embodiment of the invention, with two components and two interconnectors in an initially engaged position;
Figure 13 shows the third embodiment with the components partially engaged;
Figure 14 shows the third embodiment with the components fully engaged;
Figure 15 shows in section a fourth embodiment of the invention, with two components and two interconnectors in an initially engaged position;
Figure 16 shows the fourth embodiment with interconnectors fully deflected;
Figure 17 shows the fourth embodiment with the components subjected to an external stress;
Figures 18a to 18d show sequential stages in the production of a modified panel in accordance with a fifth embodiment of the invention;
Figure 19 is a section through a beam in accordance with a sixth embodiment of the invention; and
Figures 20a to 20c show sequential stages in the connection of two ceiling (or floor) panels in accordance with the sixth embodiment.

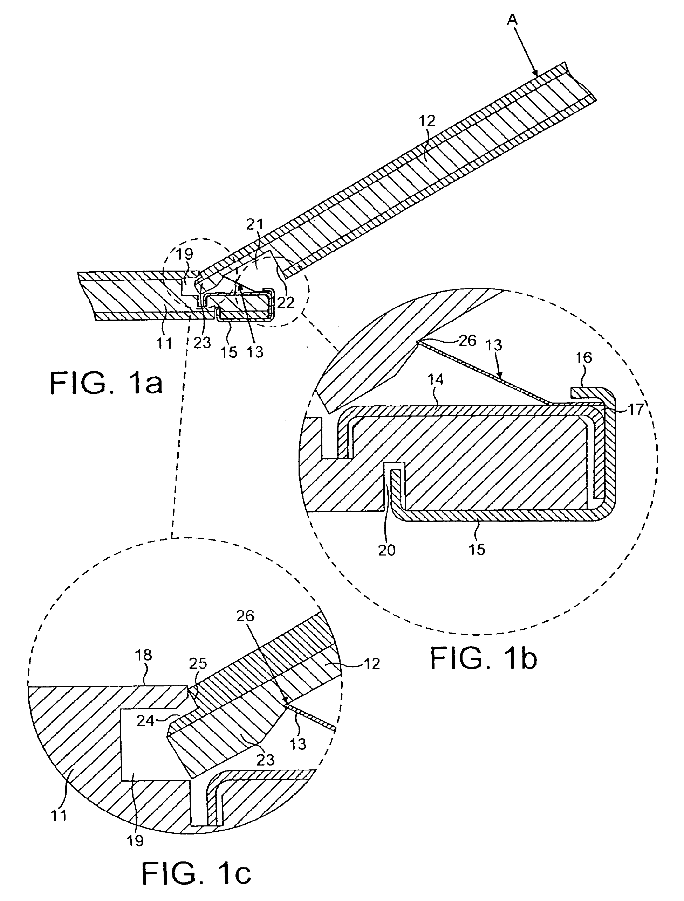

Referring to Figures 1a to 1c, two composite panels 11 and 12 are connected using an interconnector strip 13. The first panel 11 has along one edge an inverted U-shaped metal rib 14 and an overlapping U-shaped metal rib 15 with an inwardly facing flange 16 which together with the inverted rib 14 forms an elongate channel 17. The first panel 11 also has an elongate overhang 18 defining a pocket 19 spaced from the channel 17. The edge of the U-shaped metal rib opposite to the flange 16 is so located in a groove 20.

The second panel 12 has a large cutaway portion 21 along the underneath of one edge which defines a shoulder 22. The cutaway portion 21 terminates in a nose 23 which itself has a small cutaway 24 along the top edge, defining a small shoulder 25. The nose 23 has a small rebate 26 along its rear.

The strip 13 is a resilient strip which runs the length of the panels 11, 12. It has one edge located in the channel 17 and the other edge against the rebate 26.

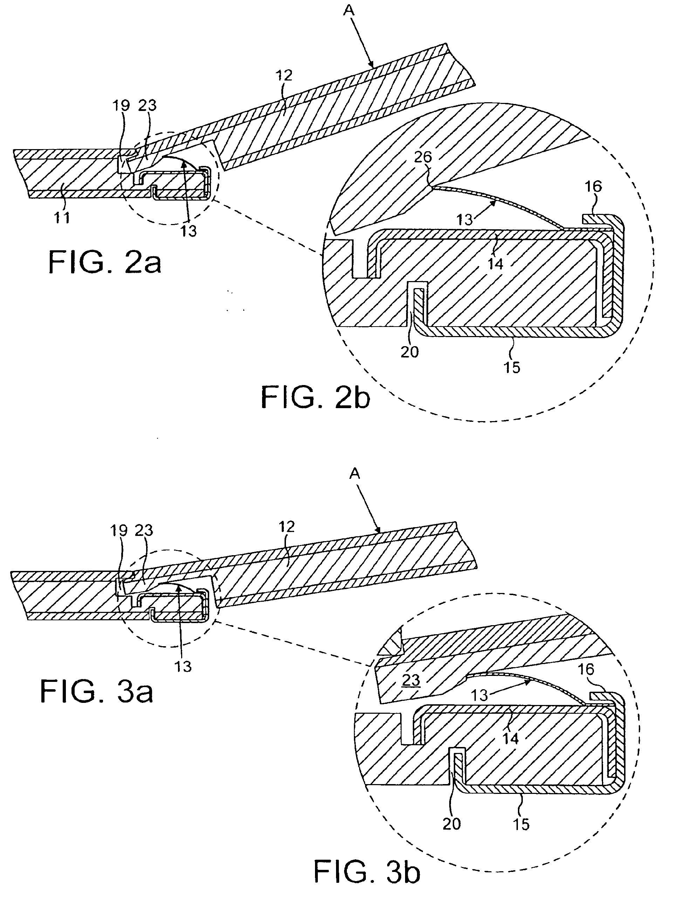

As the second panel 12 is moved in the direction of arrow A in Figure 1a, the strip 13 is deflected (and stressed) to the position shown in Figures 2a and 2b. The nose 23 enters the pocket 19 with the small shoulder 25 abutting the overhand 18 to provide a pivot point.

Continued movement as shown in Figures 3a and 3b causes the nose 23 to enter the pocket 19 further and causes an increased deflection in the strip 13.

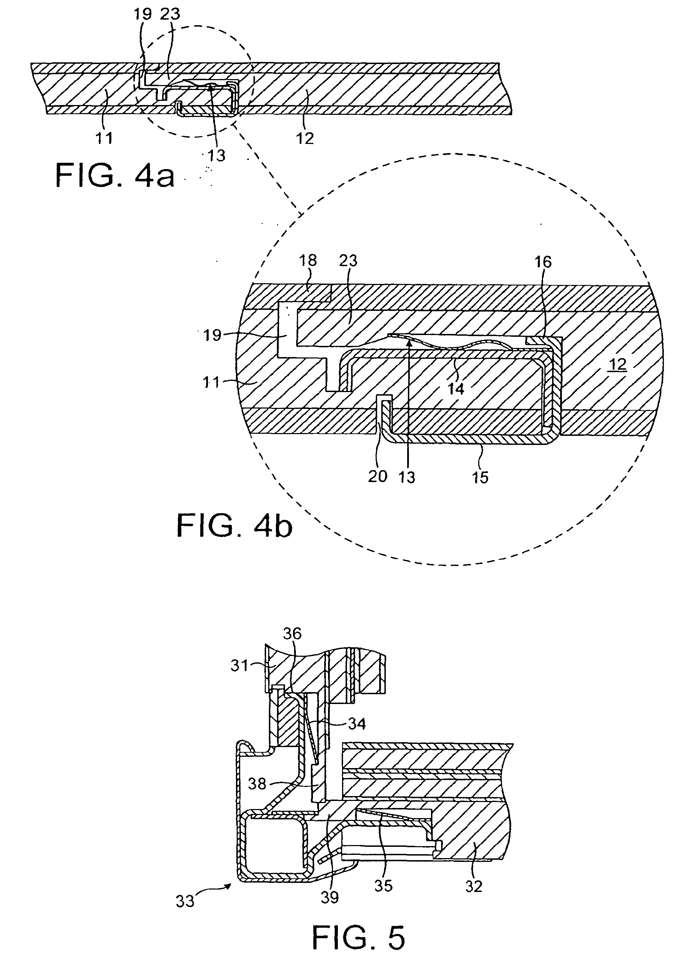

Finally, upon attaining the position shown in Figures 4a and 4b, the nose 23 has fully entered the pocket 19 and the strip 13 is fully deflected and so is in compression in a transverse direction across its width.

The stress in the strip 13 acts between the U-shaped rib 15 and the rebate 26. This forces the nose 23 of the second panel 12 into a tight engagement with the overhang 18 of the first panel 11, thus forming a virtually invisible joint line. At the same time, the U-shaped rib 15 is urged into close contact (as shown in Figure 4b) with the wall of the groove 20 in the first panel. The joint formed between the panels 11, 12 is continuous along the length of the panels resulting the two panels forming a unitary structure. Furthermore, any movement which would tend to move the panels 11, 12 apart will result in an increase in the stress in the strip 13 and will therefore increase the restoration force.

Figure 5 shows the same principle applied to joining two panels 31, 32 at right-angles. Here, the panels 31, 32 are joined through an elongate comer post assembly 33 and two strips 34, 35. Each strip 34, 35 acts between a metal rib 36, 37 on the post assembly 33 and the rear of a nose 38, 39 on each respective panel 31, 32.

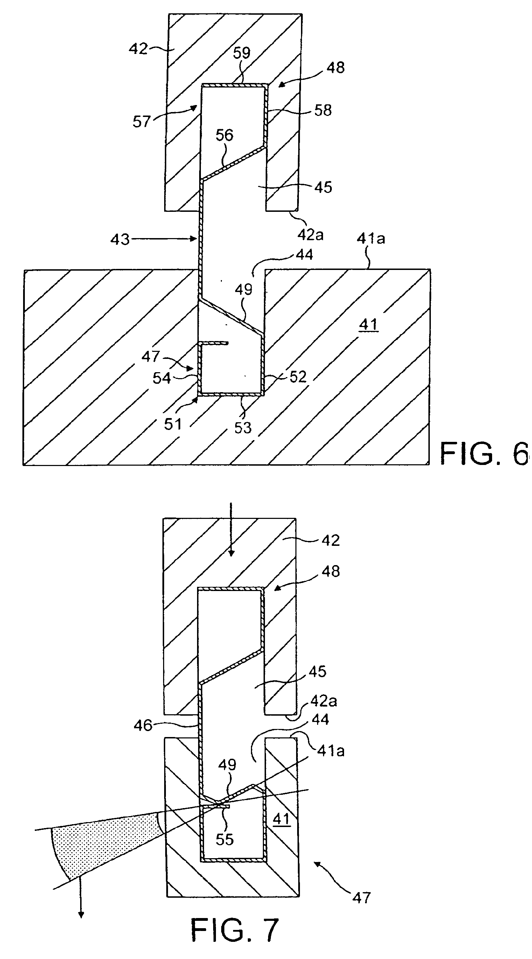

Whereas the first embodiment showed the connection of two panels side by side to form a portion of a wall, the second embodiment in Figure 6 to 8 shows how an abutment joint between two components 41, 42 can be formed, using an elongate strip 43.

The first component 41 has a groove 44 formed in one face 41a, while the second component 42 has a channel 45 formed along one edge surface 42a. The strip 43 has a convoluted cross-section including a flat central portion 46 a lower crook formation 47 and an upper crook formation 48. The lower crook 47 comprises a downwardly angled portion 49 and a closed hook 51 including four sides 52, 53, 54 and 55 all at right angles. The final side 55 protrudes inwardly at a position just below the position where the angled portion 49 joins the first side 52 of the hook 51. The upper crook 48 is rather simpler in that it comprises an upwardly angled portion 56 and an open hook 57 including two sides 58, 59 at right angles.

As shown in Figure 6, the lower crook 47 is located in the groove 44 with the wall 53 engaging the base of the groove 44 while the upper crook 48 is located in the channel 45 with the wall 59 engaging the base of the channel 45. In this initial position, the two components 41, 42 are spaced apart.

When the components 41, 42 are forced together as shown in Figure 7, the angled portion 49 of the lower crook 47 is deflected and adopts the compressed position shown. It will be appreciated that this is similar to the operation of a so-called "over-the-top" clip, because the stress in the angled portion 49 causes it to resist a movement apart of the two components 41, 42. Its tendency to straighten from its deflected configuration will cause the angled portion 49 to draw the two components 41, 42 together.

The downward motion of the lower crook 47 is limited by the final side 55 which acts as a stop.

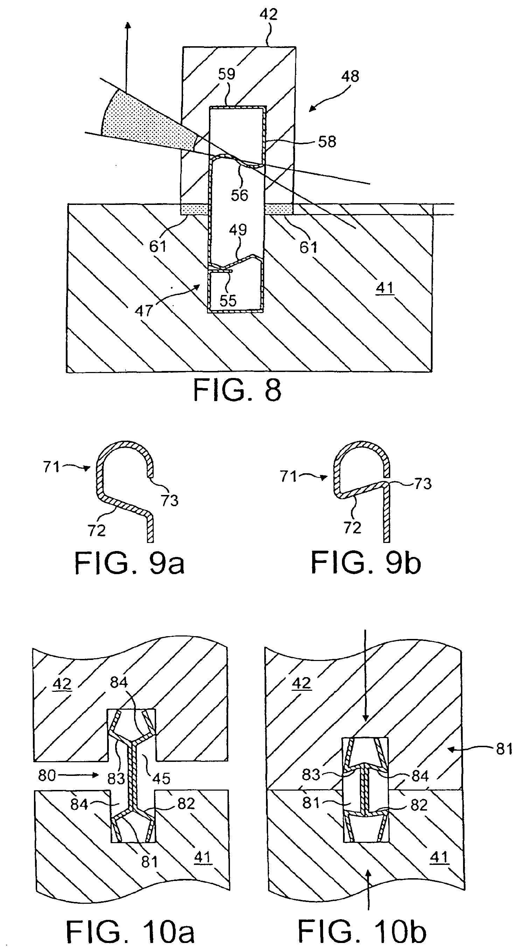

Further movement together of the two components 41, 42 will bring the faces 41 a and 42a into contact as shown in Figure 8. At the same time, the angled portion 56 of the upper crook 48 will be deflected and will adopt the compressed position shown, further movement of the lower crook 47 being prevented by the final side 55. The stress in the angled portion 56 will cause it to act in the same way as the angled portion 49 resisted by the induced pressure of reaction between the faces 41a and 42a.

The two components 41, 42 are thus drawn tightly together to form clean right-angled joint lines along their entire length. The areas of contact 61 between the two components 41, 42 may be glued, if required.

Figures 9a and 9b show an alternative form for one or both of the crooks 47, 48 on the strip 43 in Figures 6 to 8. Here, the hook portions 51, 57 are replaced by a curved semi-closed hook 71, extending from an angled portion 72.

Figure 9a shows the strip in the undeflected configuration while in Figure 9b, the angled portion is deflected and therefore in compression. As can be seen, the end 73 of the curved hook 71 acts as a stop to deflection. The curved profile is helpful in guiding the strip into grooves and channels, particularly if they have to be inserted blind.

Figures 10a and 10b show a further variant which is similar to Figures 6 to 8. However, in this case, the strip 80 has a more complex profile which approximates to two of the strips 43, back to back. The angled portions 81, 82, 83, 84 act in an "over-the-top" manner, adopting the configuration shown in Figure 10b when the components 41, 42 are moved together into mutual engagement. in this way, the stresses in the angled portions 81, 82, 83, 84 act to draw the components 41, 42 together.

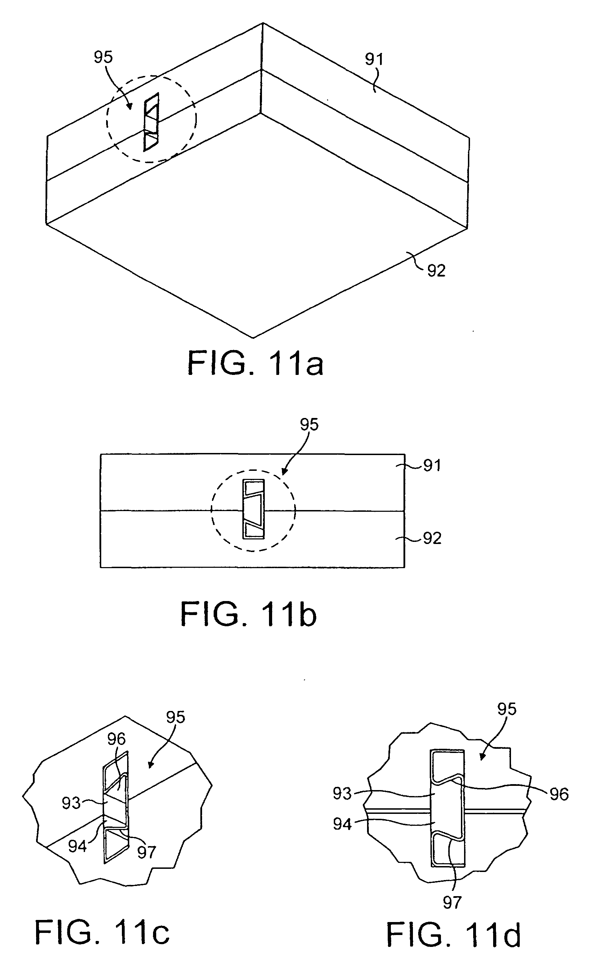

Figures 11a to 11d show a very similar arrangement to that of Figures 6 to 9 for connecting to components 91, 92 face to face. In this case, each component 91, 92 has a respective groove 93, 94 into which a strip 95 is inserted. The strip 95 has an upper and a lower crook similar to the upper crook 48 shown in Figure 6. The two components, 91, 92 are shown in Figures 11a and 11b while the strip 95 is shown to an enlarged scale in Figures 11c and 11d. The four views show the strip in its deflected configuration with the angled portions 96, 97 in a compressed state, drawing the components 91, 92 together.

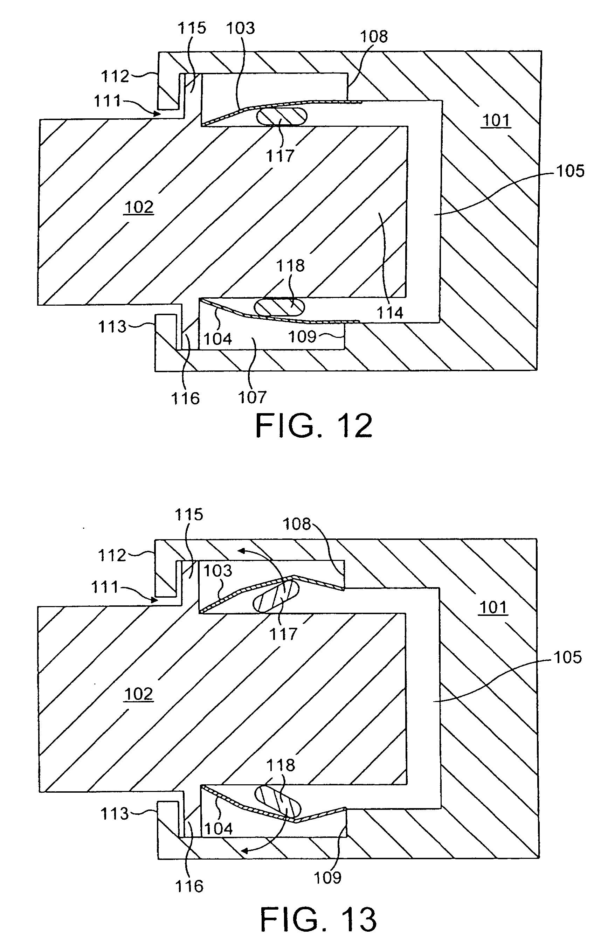

The embodiment shown in Figures 12 to 14 shows two components 101, 102 connected by means of two strips 103, 104. The first component 101 has an elongate stepped channel 105, the channel 105 having a narrower portion 106 and a wider portion 107 separated by a ledge 108, 109 along each wall. The channel 105 has a narrow neck 111 defined by two inward flanges 112, 113.

The second component 102 has an elongate body 114 positioned in the channel 105 and two elongate ribs 115, 116 which are located behind the flanges 112, 113. The second component 102 is located by longitudinal insertion in the channel 105.

The strips 103, 104 are positioned behind the ribs 115, 116. An actuator in the form of an eccentric elongate key 117, 118 is located between each strip 103, 104 and the body 114 of the second component. The actuators 117, 118 are each rotatable about a longitudinal axis.

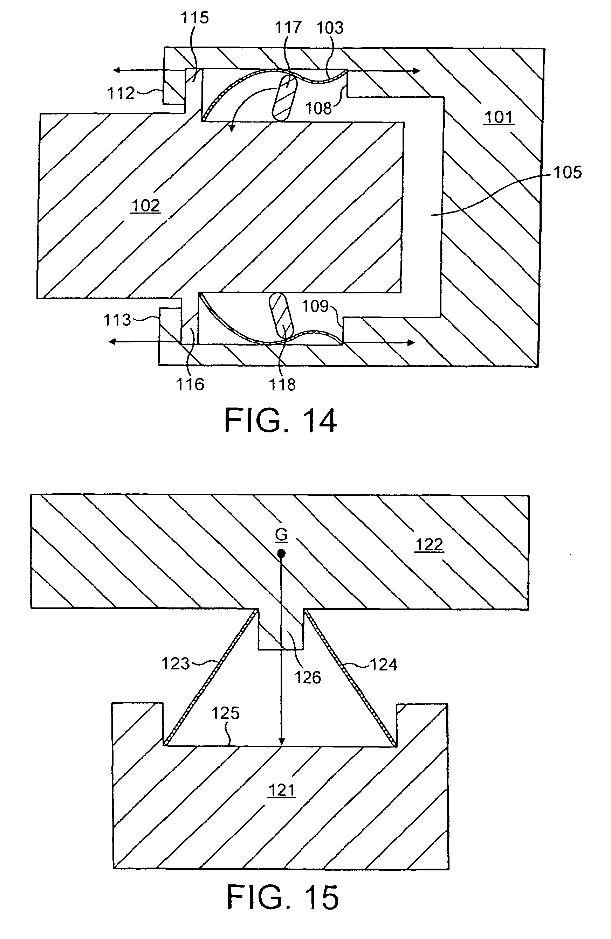

The components are firmly connected together by forcing the ribs 115, 116 on the second component against the respective flanges 112, 113 on the first component. This is achieved by rotating the keys 117, 118 as shown in Figure 13, which deflects the strips 103, 104 until they adopt the position shown in Figure 14. Here, they are in compression and act between the ledges 108, 109 and the ribs 115, 116, forcing the ribs 115, 116 against the flanges 112, 113.

Once the components are securely engaged, optionally the keys 117, 118 may be removed.

Figures 15 to 17 show two elongate components 121, 122 joined together by two series of resilient pins 123, 124, in a dynamic equilibrium condition. The first component 121 has a wide, shallow channel or pocket 125, and the second component 122 has a narrow bead along its length, 126 facing the channel or pocket 125. The pins 123 extend between one side of the bead 126 and one wall of the channel 125 and between the other side of the bead 126 and the other wall of the channel 125.

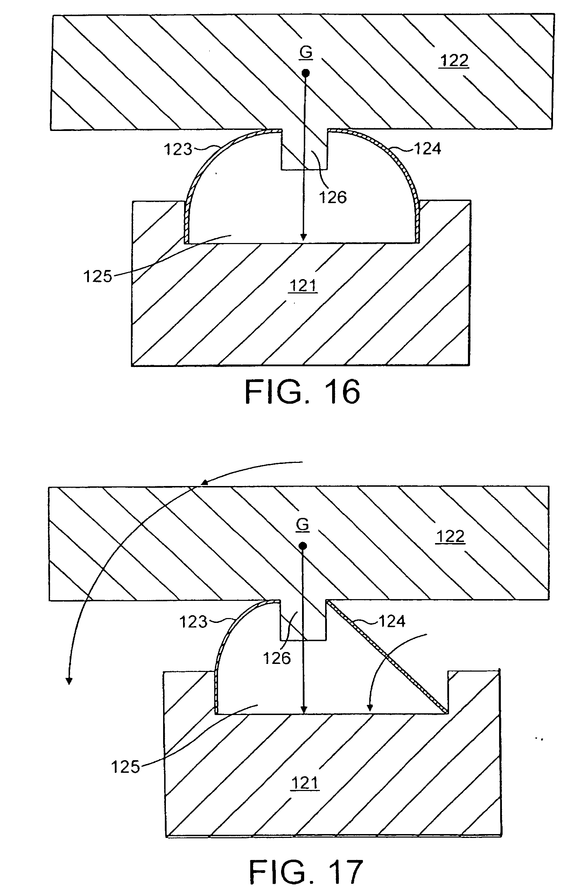

The weight of the second component deflects the pins 123, 124 as shown in Figure 16, placing them in compression. The dynamic equilibrium condition allows relative movement of the components 121, 122 but the pins 123, 124 provide a restorative force. This is shown in Figure 17, where an external force is applied to the second component 122.

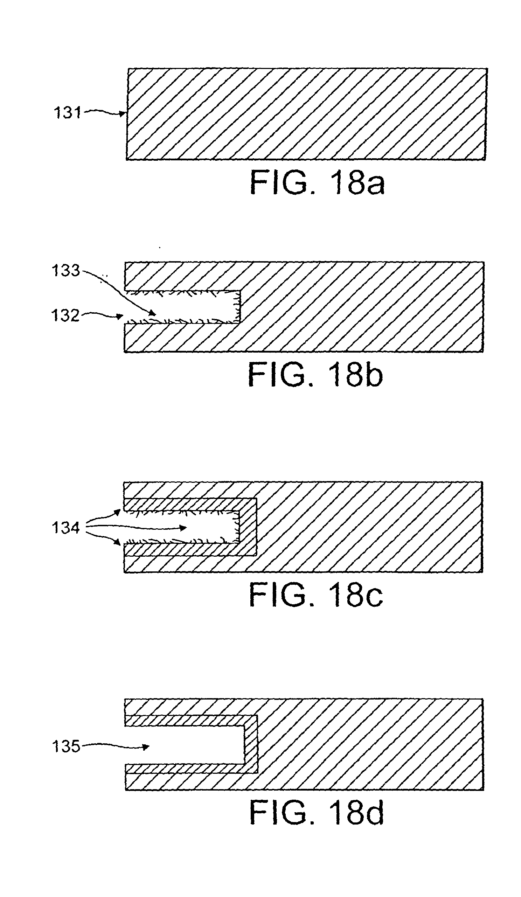

Figures 18a and 18d show sequential stages in the manufacture of a panel for use in the invention.

An MDF panel 131 as shown in Figure 18a is first formed with a channel 132 along one edge. The channel 132 is roughly formed, with fibres 133 remaining, as shown in Figure 18b. The base and sides of the channel 132 are impregnated with a resin 134, in this case PMDI/UF as shown in Figure 18c, and this is cured (or allowed to set). In the impregnated regions, the resin represents about 90% by volume of the panel. When it has cured completely, a new channel 135 is machined into the resin impregnated regions, to the required accuracy.

The extra strength and dimensional stability of the resin-impregnated regions allow very accurate machining (to ±100 µm or even < ± 50 µm) and provide the final product with a strength sufficient to receive the stressed strips described in the earlier embodiments.

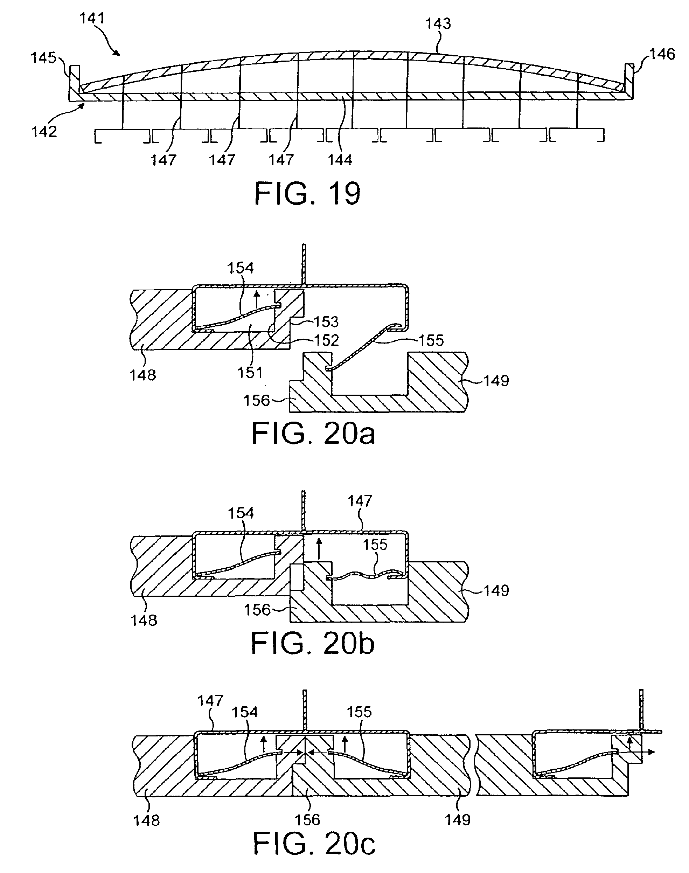

Figure 19 shows a beam 141 in longitudinal cross-section. The beam 141 consists of a lower support 142 made from steel, wood, grp, concrete and an upper resilient member 143 made from grp or metal. The support 142 comprises a flat bar 144 with upstanding end walls 145, 146. The resilient member 143 is slightly longer than the distance between the end walls 145, 146 but is located between them. In this way, the resilient member is deflected and placed in compression. A series of hangers 147 are suspended from the resilient member 143.

Ceiling panels 148, 149 are attached to the hangers 147 as shown in Figures 20a to 20c. Each panel 148, 149 includes at one end a groove 151 defined by an upstanding rib 152. The bottom of the rib 152 has a cutaway portion 153. One side of a hanger 147 is located in the groove 151 and a resilient strip 154 extends between the hanger 147 and the rib 152. The strip 154 is deflected and placed in compression in the same way as the strips in the earlier embodiments, and forces the side of the hanger 147 into engagement with the wall of the groove 151, as shown in Figure 20a.

A second panel 149 is brought into engagement with the first panel 148 as shown in Figures 20b and 20c. Firstly, a strip 155 is located between a rib 155 on the panel and the other side of the hanger 147. The panel 149 is moved upwards, deflecting the strip 155 until it engages the first panel 148. The second panel 149 has a step 156, which engages the cutaway 153 in the first panel. The mutual actions of the two strips 154, 155 acting between the sides of the hanger 147 and the ribs 152, 156, force the panels into close engagement, forming a tight joint line.

## Claims

**1.** A method of connecting two components (11,12) using a resilient elongate interconnector (13), the interconnector (13) including two elongate edges, **characterised in that** the method comprises: bringing one elongate edge of the interconnector (13) into engagement with a part (17) of the first component (11); bringing another elongate edge of the interconnector (13) into engagement with a part (26) of the second component (12); and causing a deflection in the interconnector (13) between the two elongate edges, thereby creating in the interconnector (13) a transverse compression force which acts between the two components (11,12), thereby driving the two components (11,12) together.

**2.** A method as claimed in Claim 1, **characterised in that** the interconnector (13) engages the two components (11,12) substantially along the entire length of the interconnector (13).

**3.** A method as claimed in Claim 1 or Claim 2, **characterised in that** the components (11,12) are configured so that as a whole, they are forced together by the transverse compression force.

**4.** A method as claimed in any preceding Claim, **characterised in that** the components (11,12) are structural or internal architectural elements.

**5.** A method as claimed in any preceding Claim, **characterised in that** the interconnector (13), prior to the deflection, comprises an elongate strip.

**6.** A method as claimed in Claim 5, **characterised in that** the strip (13) is made from a polycarbonate, polyester, nylon, beryllium copper, spring steel or reinforced polymer.

**7.** A method as claimed in any preceding Claim, **characterised in that** the two components (11,12) are brought into engagement with the interconnector (13) and are subsequently brought into their final fully engaged position by relative movement of the components (11,12), the relative movement bringing about the deflection in the interconnector (13), thereby creating a restorative force in the interconnector (13) which acts to urge the components (11,12) into their final position.

**8.** A method as claimed in any of Claims 1 to 6, **characterised in that** the interconnector (103,104) is deformed by an actuator (117,118) which is operated when the components (101,102) are in their required relative positions.

**9.** A method as claimed in Claim 8, **characterised in that** the actuator (117,118) acts directly on the interconnector (103,104).

**10.** A method as claimed in Claim 8, **characterised in that** the actuator (117,118) takes the form of an elongate cam member which extends substantially the length of the interconnector (103,104) and is arranged parallel to the interconnector, and acts on the interconnector along its length.

**11.** A method as claimed in Claim 8, **characterised in that** the actuator (117,118) has an eccentric axis about which it is rotatable.

**12.** A method as claimed in any of Claims 8 to 11, **characterised by** at least two interconnectors (103,104) and actuators (117,118) associated with each pair of components (101,102) to be connected.

**13.** A method as claimed in any preceding Claim, **characterised in that** the components (11,12; 101,102) are generally planar and are connected parallel to each other or at an angle to each other.

**14.** A method as claimed in any of Claims 5 to 13, **characterised in that** the method is applied to a plurality of components (11,12), each component (11,12) being in the form of a panel, whereby the interconnectors (13) create an interconnecting network of compressive forces between all individual joined panels (11,12), thus making them into mono-plates, the mono-plates comprising ceiling mono-plates, wall mono-plates and floor mono-plates, thus creating a monolithic shell.

**15.** A structure comprising a pair of components (121,122), one (122) located above the other (121), and two interconnectors (123,124), **characterised in that** each interconnector (123,124) engages both components (121,122), and the weight of the component above (122) causes a deflection in the interconnectors (123,124), whereby the two components (121,122) are connected and held apart in a dynamic equilibrium condition by the two interconnectors (123,124).

**17.** A structure as claimed in Claim 15, **characterised in that** each interconnector (123,124) comprises a plurality of discrete components such as pins, fibres, acicular struts or plates.

**18.** A component in the form of a modified building panel (131), arranged to receive and engage an interconnector in accordance with the method of any of Claims 1 to 14, **characterised in that** the panel (131) comprises a fibre board panel which is locally modified in certain predetermined areas (132) by impregnation with a resin (134), the resin (134) representing up to 50% by volume of the board, the resin (134) preferably comprising polymethane diphenyl diisocyanate or urea formaldehyde.

**19.** A structure made in accordance with a method as claimed in any of Claims 1 to 14.

**20.** A beam suitable for suspending a ceiling or supporting a floor, **characterised in that** the beam (141) comprises two interengaging elongate members, the first elongate member (142) being relatively rigid and the second (143) being relatively resilient, the interengagement of the two members (142,143) being such that the second member (143) is forced into a deflected state by the first member (142), whereby the second member (143) is in compression and the first member (142) is in tension.

**21.** A beam as claimed in Claim 20, **characterised in that** the first member (142) is a flat bar (144) with an upturned shoulder (145,146) at each end defining a nick at each end between the bar (144) and the shoulders (145,146), and the second member (143) is a resilient strip whose length is slightly greater than the distance between the shoulders (145,146) of the first member (142).

**22.** A beam as claimed in Claim 20 or Claim 21, **characterised in that** the ends of the strip (143) are located in the nicks, thereby causing the deflection in the second member (143).

**23.** A beam as claimed in any of Claims 20 to 22, **characterised in that** the first member (142) is made from wood, steel, grp or concrete, and the second member (143) is made from grp, metal or wood.

**24.** A beam as claimed in any of Claims 20 to 23, **characterised in that** the length of the second (143) member exceeds the distance between the shoulders (145,146) of the first member (142) by 1 to 10 %.

**25.** A ceiling comprising a plurality of beams (141) as claimed in any of Claims 20 to 24, together with ceiling panels (148,149), the ceiling panels (148,149) being suspended from the respective second members (143) of the beams (141) at spaced intervals.

**26.** A ceiling as claimed in Claim 25, **characterised in that** the panels (148,149) are interconnected by the use of suspension fittings (147) suspended from the respective second members (143) of the beams (141).

**27.** A floor comprising a plurality of beams (141) as claimed in any of Claims 20 to 24, together with floor panels supported at spaced intervals from respective second members (143) of the beams (141).

**28.** A floor as claimed in Claim 27, **characterised in that** the floor panels are interconnected by support fittings extended upwards from the respective second members of the beams.
